# EUROPEAN PATENT SPECIFICATION

(11) **EP 2 725 078 B1**
(45) Date of publication and mention of the grant of the patent: **15.11.2017**
(21) Application number: 13004658.4
(22) Date of filing: 25.09.2013
(51) Int. Cl.: C09D 183/12, C08G 77/24

(54) **Coating composition, surface treating material containing said composition, and article whose surface is treated with said surface treating material**
Beschichtungszusammensetzung, Oberflächenbehandlungsmaterial mit dieser Zusammensetzung, und Artikel, dessen Oberfläche mit dem Oberflächenbehandlungsmaterial behandelt ist
Composition de revêtement, matériau de traitement de surface contenant ladite composition et article dont la surface est traitée avec ladite matière de traitement de surface

(30) Priority: 24.10.2012 JP 2012234344
(43) Date of publication of application: 30.04.2014
(73) Proprietor: Shin-Etsu Chemical Co., Ltd., Chiyoda-ku, Tokyo (JP)
(72) Inventor: Yamane, Yuji, Annaka-shi, Gunma-ken (JP); Komori, Hisatoshi, Annaka-shi, Gunma-ken (JP); Sato, Shinichi, Annaka-shi, Gunma-ken (JP); Koike, Noriyuki, Annaka-shi, Gunma-ken (JP)
(74) Representative: Wibbelmann, Jobst

(56) References cited:
- EP-A1- 2 399 570
- JP-A- 2003 113 244

## Description

### BACKGROUND OF THE INVENTION

### 1. Field of the Invention

The present invention relates to a coating composition containing a fluorooxyalkylene-containing polymer, a surface treating material containing the composition, and an article treated with the surface treating material.

### 2. Description of the Related Art

Generally a surface free energy of a perfluorooxyalkylene-containing compound is very small, so that the compound has water-repellent and oil-repellent properties, a chemical resistance, a lubricating property, a mold-releasing property, an anti-fouling property, and so forth. By utilizing such properties, it is widely used in industry as a water-repellent, oil-repellent anti-fouling agent for paper, fiber, and so forth, a lubricating material of a magnetic recording medium, an oil-proof material for a precision apparatus, a mold-releasing agent, a cosmetic, a top coat, and so forth.

At the same time, however, its properties indicate non-tackiness and non-adhesiveness to other substrates; and thus, the film thereof cannot compactly adhere to these substrates even if it can be coated on the substrate surface.

On the other hand, as to the material to bond an organic compound with surface of a substrate such as a glass and a cloth, a silane coupling agent has been well known. This silane coupling agent has an organic functional group and a reactive silyl group (generally an alkoxysilyl group) in one molecule. The alkoxysilyl group undergoes a self-condensation reaction by a moisture in an air thereby changing itself to a siloxane to form a film. At the same time, the alkoxysilyl group makes a bond chemically and physically to surface of a glass, a metal, and so forth to form a sustainable strong film. By using this property, the silane coupling agent is widely used as a coating material for surface of various substrates; and a compound applying the silane coupling agent to provide surface of the substrate with the characteristics of the perfluorooxyalkylene group has been disclosed.

In Patent Document 1, the high water-repellent and oil-repellent properties are realized by coating a glass with a fluoroaminosilane compound shown by the following formula. However, the perfluorooxyalkylene chain of this compound is too short to fully realize a lubricating property, a mold-releasing property, and an anti-fouling property, 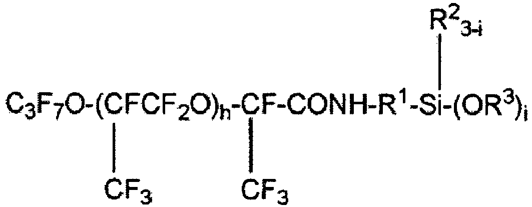 wherein R² and R³ represent an alkyl group having 1 to 4 carbon atoms; R¹ represents CH₂CH₂CH₂ or CH₂CH₂NHCH₂CH₂CH₂; "h" represents an integer of 0 to 8; and "i" represents 2 or 3.

In Patent Document 2, a perfluoropolyether-modified aminosilane having a branched long chain perfluorooxyalkylene group shown by the following formula is described. The perfluoropolyether-modified aminosilane has high water-repellent and oil-repellent properties; but because of the branched main chain structure, its dust-wiping property and lubricating property are insufficient, 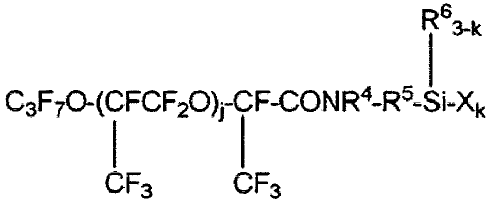 wherein X represents a hydrolysable group; R⁴ represents a monovalent hydrocarbon group; R⁶ represents a hydrogen atom or a monovalent hydrocarbon group; R⁵ represents an alkylene group optionally intervened with a NH group; "j" represents an integer of 14 to 49; and "k" represents 2 or 3.

In Patent Document 3, a perfluoropolyether-modified silane having a linear perfluorooxyalkylene group shown by the following formula is described. A lens and an antireflective film which are treated with this perfluoropolyether-modified silane are excellent in its sliding property, mold-releasing property, and abrasion resistance; but because the both terminals thereof are fixed to the substrate, a lubricating property thereof is insufficient, 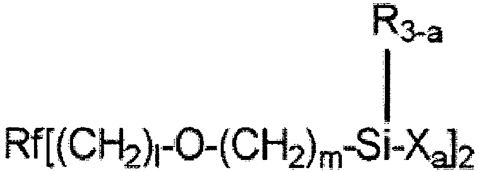 wherein Rf represents a divalent linear perfluoropolyether group; R represents an alkyl group having 1 to 4 carbon atom or a phenyl group; X represents a hydrolysable group; "l" represents an integer of 0 to 2; "m" represents an integer of 1 to 5; and "a" represents 2 or 3.

In Patent Document 4, a perfluoropolyether-modified silane shown by the following formula is described as a treating material that is enhanced in its lubricating property. However, this compound is poor in its water-repellent and oil-repellent properties, low dynamic friction property, and mold-releasing property because it lacks a fluorine-containing group in its terminal,

(Z²Q)_{β}Rf(QZ¹A_{α})_{2-β}

wherein Rf represents a group containing a divalent perfluoroether residue; Q represents a divalent organic group; Z¹ and Z² represent an organopolysiloxane residue; "A" represents a reactive terminal silyl group; α represents an integer of 1 to 8; and β represents a number greater than 0 and less than 2.

Patent Document 1: Japanese Patent Laid-Open Publication No. S58-167597
Patent Document 2: Japanese Patent Laid-Open Publication No. 2000-143991
Patent Document 3: Japanese Patent Laid-Open Publication No. 2003-238577
Patent Document 4: Japanese Patent Laid-Open Publication No. 2007-297589
Further to the above-referred patent documents, JP 2003 113244 A discloses surface treating agents comprising a one-terminal hydrolysable polymer, coatings and articles comprising it, rendering surfaces water repellent, oil repellent, stain resistant, etc.

### SUMMARY OF THE INVENTION

The coating composition according to the present invention is defined in claim 1. Preferred features are defined in claim 2. A surface treating material, an article and a surface-treated article are defined in claims 3, 4 and 5. The following description refers to embodiments comprising a both-terminal hydrolysable polymer according to the claims and an one-terminal hydrolysable polymer, which is useful for understanding the present invention.

A dynamic friction coefficient of a water-repellent and oil-repellent layer that covers surface of a touch panel display is preferably low in view of a scratch resistance and a fingerprint wiping-out property. Especially, a film having a good sliding property in its surface has better abrasion resistance and scratch resistance as compared with the film not having it. In addition, depending on the substrate to be coated, an acid resistance or a base resistance is necessary. Inventors of the present invention have made an invention with regard to the polymer composition which forms a film provided with such property as excellent water-repellent and oil-repellent properties and which comprises a mixture. The mixture consists of a fluorooxyalkylene-containing polymer having a fluorine group on its one terminal and a hydrolysable group on its other terminal and a fluorooxyalkylene-containing polymer having hydrolysable groups on the both terminals; however, the composition was insufficient in its chemical resistance. Accordingly, its use as a surface treating material for a substrate that requires an acid resistance or a base resistance has been unsatisfactory.

The present invention was made in view of the problems mentioned above, and it has an object to provide: a coating composition comprising a fluorooxyalkylene-containing both-terminal hydrolysable polymer, having excellent water-repellent and oil-repellent properties and chemical resistance as well as excellent scratch resistance; and a surface treating material using the composition

To solve the problems mentioned above, the present disclosure provides a coating composition comprising any one or more of a fluorooxyalkylene-containing one-terminal hydrolysable polymer as shown by the following formula (1) (useful for understanding the present invention) and a fluorooxyalkylene-containing both-terminal hydrolysable polymer as shown by the following formula (2), 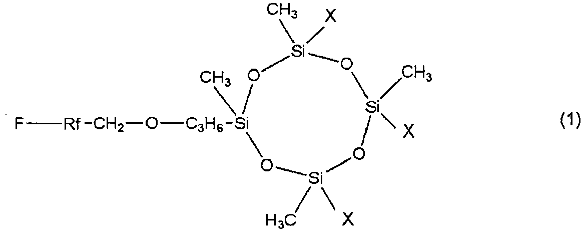 wherein Rf represents a divalent perfluorooxyalkylene-containing group; X represents a -(CH₂)ₙSiX' group or a hydrogen atom, wherein one or less of X represents a hydrogen atom; "n" represents an integer of 2 to 10; and X' represents a hydrolysable group, 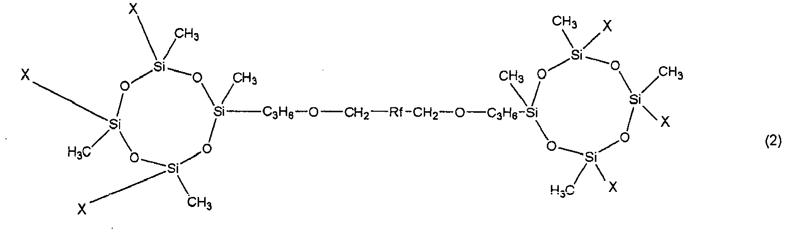 wherein Rf, X, and "n" represent the same meanings as the formula (1), though one or less of X in each terminal represents a hydrogen atom.

Accordingly, the coating composition comprising any one or more of a fluorooxyalkylene-containing one-terminal hydrolysable polymer as shown by the following formula (1) and a fluorooxyalkylene-containing both-terminal hydrolysable polymer as shown by the following formula (2) can give a water-repellent and oil-repellent film having a sustainability to an acid and a base.

Here, it is preferable that the Rf group in the formula (1) contains 3 to 200 of the repeating unit shown by the following general formula,

-C_{d}F_{2d}O-

wherein "d" represents an integer of 1 to 6 independently in each unit.

In this case, a linear form is especially preferable in view of a low dynamic friction property.

In addition, it is preferable that the Rf group in the formula (1) be a group selected from the groups shown by any of the following general formulae (3), (4), and (5), 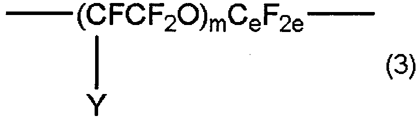 wherein Y independently represents F or a CF₃ group; "m" represents an integer of 3 to 200; and "e" represents an integer of 1 to 3,

- (CF₂CF₂CF₂O)ₘCₑF₂ₑ- (4)

wherein "m" represents an integer of 3 to 200; and "e" represents an integer of 1 to 3, 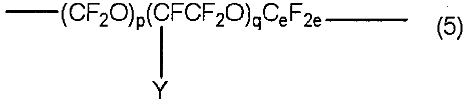 wherein Y independently represents F or a CF₃ group; "p" and "q" each represent an integer of 0 to 200 with p+q of 3 to 200; each repeating unit may be bonded randomly; and "e" represents an integer of 1 to 3.

The main chain structure as mentioned above can form a film having excellent water-repellent and oil-repellent properties as well as a good fingerprint wiping-out property. In addition, the non-branching main chain structure (Y=F) may conduce to a further lower dynamic friction property.

In addition, it is preferable that the Rf group in the formula (2) be a group selected from the groups shown by any of the following general formulae (6), (7), and (8), 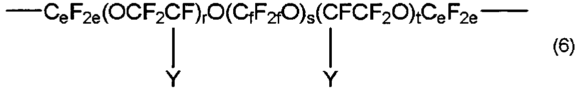 wherein each Y independently represents F or a CF₃ group; "e" represents an integer of 1 to 3; "f" represents an integer of 2 to 6; "r" and "t" each represent an integer of 0 to 200 with r+t of 3 to 200; "s" represents an integer of 0 to 6; and each repeating unit may be bonded randomly,

-CₑF₂ₑ(CF₂CF₂CF₂O)ₘCₑF₂ₑ- (7)

wherein "m" represents an integer of 3 to 200; and "e" represents an integer of 1 to 3, 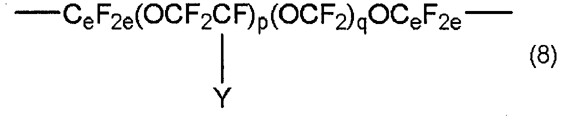 wherein each Y independently represents F or a CF₃ group; "e" represents an integer of 1 to 3; "p" and "q" each represent an integer of 0 to 200 with p+q of 3 to 200; and each repeating unit may be bonded randomly.

The main chain structure as mentioned above can form a film having excellent water-repellent and oil-repellent properties as well as a good fingerprint wiping-out property. In addition, the non-branching main chain structure (Y=F) may conduce to a further lower dynamic friction property.

In addition, the present disclosure provides a surface treating material which contains a coating composition comprising any one or more of the fluorooxyalkylene-containing one-terminal hydrolysable polymer and the fluorooxyalkylene-containing both-terminal hydrolysable polymer and/or a coating composition comprising a partial hydrolysis condensation compound of the fluorooxyalkylene-containing polymers.

As mentioned above, a surface treating material provided with not only water-repellent and oil-repellent properties but also a chemical resistance can be obtained by containing therein the coating composition of the present invention.

In addition, the present disclosure provides an article treated with the surface treating material.

An article treated with the surface treating material as mentioned above can have a chemical resistance, a surface sliding property, and water-repellent and oil-repellent properties.

Especially, an article treated with the surface treating material can be made to any of an optical article, a film, a glass, and a quartz substrate, and can be used for a touch panel display, an antireflective film, and so on.

As explained above, the coating composition of the present disclosure comprising any one or more of the fluorooxyalkylene-containing one-terminal hydrolysable polymer and the fluorooxyalkylene-containing both-terminal hydrolysable polymer can give a water-repellent and water-repellent film having an excellent sustainability to an acid and a base. Accordingly, this is useful for coating of a substrate surface requiring sustainability to an acid and a base. In the surface treating material containing the coating composition comprising the fluorooxyalkylene-containing polymers of the present disclosure, a linear fluorooxyalkylene-containing polymer has an excellent surface sliding property; and thus, it is particularly useful as a water-repellent and oil-repellent layer for optical articles such as a touch panel display and an antireflective film.

### DESCRIPTION OF THE PREFERRED EMBODIMENTS

Hereinafter, the present invention will be explained in more detail.

As mentioned above, development of a coating composition comprising any one or more of a fluorooxyalkylene-containing one-terminal hydrolysable polymer and a fluorooxyalkylene-containing both-terminal hydrolysable polymer, having excellent chemical resistance, water-repellent and oil-repellent properties, and low dynamic friction property has been wanted.

In order to accomplish the above object, inventors of the present invention carried out an extensive investigation; and as a result, they found that an excellent chemical resistance can be expressed by containing therein any one or more of a fluorooxyalkylene-containing one-terminal hydrolysable polymer as shown by the following formula (1) and a fluorooxyalkylene-containing both-terminal hydrolysable polymer as shown by the following formula (2), 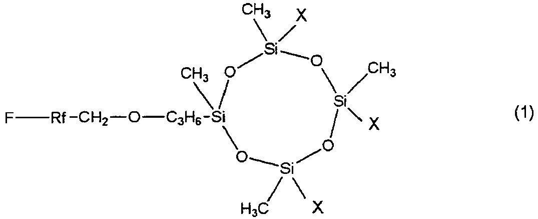 wherein Rf represents a divalent perfluorooxyalkylene-containing group; X represents a -(CH₂)ₙSiX' group or a hydrogen atom, wherein one or less of X represents a hydrogen atom; "n" represents an integer of 2 to 10; and X' represents a hydrolysable group, 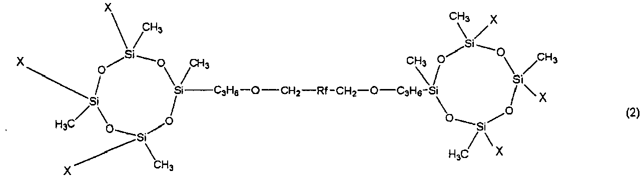 wherein Rf, X, and "n" represent the same meanings as the formula (1), though one or less of X in each terminal represents a hydrogen atom.

That is, the present disclosure is characterized in that the composition comprises any one or more of a fluorooxyalkylene-containing one-terminal hydrolysable polymer as shown by the following formula (1) (useful for understanding the present invention) and a fluorooxyalkylene-containing both-terminal hydrolysable polymer as shown by the following formula (2), 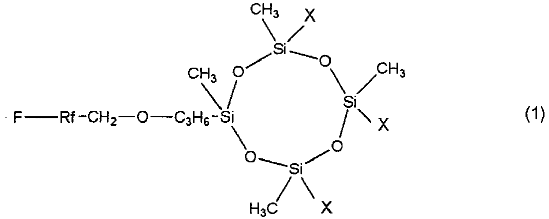 wherein Rf represents a divalent perfluorooxyalkylene-containing group; X represents a -(CH₂)ₙSiX' group or a hydrogen atom, wherein one or less of X represents a hydrogen atom; "n" represents an integer of 2 to 10; and X' represents a hydrolysable group, 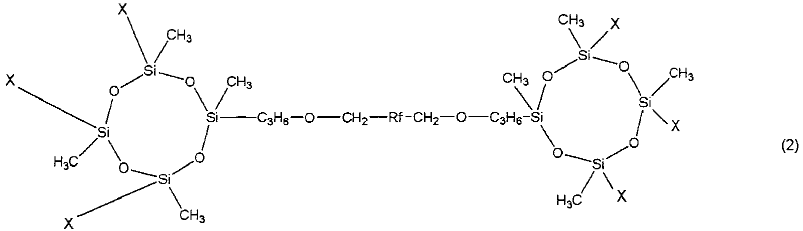 wherein Rf, X, and "n" represent the same meanings as the formula (1), though one or less of X in each terminal represents a hydrogen atom.

Hereinafter, the present invention will be explained in detail, but the present invention is not limited to this explanation.

The Rf group in the formulae (1) and (2) represents a divalent perfluorooxyalkylene-containing group. The fluorooxyalkylene group contains 3 to 200, preferably 10 to 150, or more preferably 20 to 100 of the repeating unit -C_{d}F_{2d}O- ("d" represents an integer of 1 to 6 independently in each unit).

Illustrative example of the repeating unit -C_{d}F_{2d}O- shown in the formula (1) includes the following units. Here, Rf may be one kind of the repeating unit or a combination of two or more of them.
-CF₂O-
-CF₂CF₂O-
-CF₂CF₂CF₂-
-CF₂CF₂CF₂CF₂-
-CF₂CF₂CF₂CF₂CF₂O-
-CF₂CF₂CF₂CF₂CF₂CF₂O-

The Rf group containing the foregoing repeating units is preferably a group selected from the groups shown by the following general formulae (3) to (5), 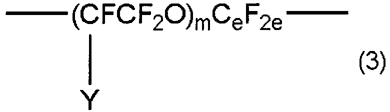 wherein Y independently represents F or a CF₃ group; "m" represents an integer of 3 to 200; and "e" represents an integer of 1 to 3,

- (CF₂CF₂CF₂O)ₘCₑF₂ₑ- (4)

wherein "m" represents an integer of 3 to 200; and "e" represents an integer of 1 to 3, 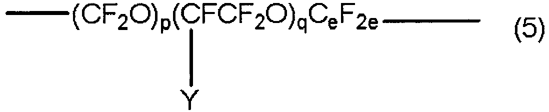 wherein Y independently represents F or a CF₃ group; and "p" and "q" each represent an integer of 0 to 200 with p+q of 3 to 200, preferably 10 to 150, or more preferably 20 to 100. If p+q is equal to or below the upper limit, there is no fear of deterioration of adhesiveness and curing properties; and if p+q is equal to or above the lower limit, characteristics of the fluorooxyalkylene group can be fully expressed. Each repeating unit may be bonded randomly; and "e" represents an integer of 1 to 3.

The Rf group of the formula (2) is preferably a group selected from the groups shown by the following general formulae (6), (7), and (8), 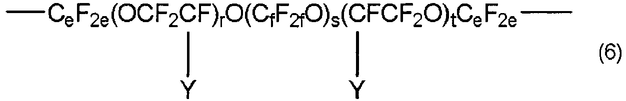 wherein each Y independently represents F or a CF₃ group; "e" represents an integer of 1 to 3; "f" represents an integer of 2 to 6; "r" and "t" each represent an integer of 0 to 200 with r+t of 3 to 200, preferably 10 to 150, or more preferably 20 to 100; "s" represents an integer of 0 to 6; and each repeating unit may be bonded randomly. If r+t is equal to or below the upper limit, there is no fear of deterioration of adhesiveness and curing properties; and if p+q is equal to or above the lower limit, characteristics of the fluorooxyalkylene group can be fully expressed.

-CₑF2ₑ(CF₂CF₂CF₂O)ₘCeF₂ₑ- (7)

wherein "m" represents an integer of 3 to 200; and "e" represents an integer of 1 to 3, 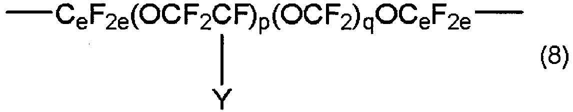 wherein each Y independently represents F or a CF₃ group; "e" represents an integer of 1 to 3; and "p" and "q" each represent an integer of 0 to 200 with p+q of 3 to 200, preferably 10 to 150, or more preferably 20 to 100. Each repeating unit may be bonded randomly.

In the formula (1), X represents a -(CH₂)ₙSiX' group or a hydrogen atom, wherein one or less of X represents a hydrogen atom; and "n" represents an integer of 2 to 10. X' represents a hydrolysable group. In the formula (2), X represents a -(CH₂)ₙSiX' group or a hydrogen atom, wherein one or less of X represents a hydrogen atom; and "n" represents an integer of 2 to 10. Each X' represents hydrolysable groups which may be different with each other. Illustrative example thereof includes an alkoxy group having 1 to 10 carbon atoms such as a methoxy group, an ethoxy group, a propoxy group, and a butoxy group; an oxyalkoxy group having 2 to 10 carbon atoms such as a methoxy methoxy group and a methoxy ethoxy group; an acyloxy group having 1 to 10 carbon atoms such as an acetoxy group; an alkenyloxy group having 2 to 10 carbon atoms such as an isopropenoxy group; and a halogen group such as a chloro group, a bromo group, and iodo group. Among them, a methoxy group, an ethoxy group, an isopropenoxy group, and a chloro group are preferable.

The coating composition of the present invention can give a coating having excellent abrasion resistance and scratch resistance by having a siloxane bond in its molecular structure.

The coating composition comprising any one or more of the fluorooxyalkylene-containing one-terminal hydrolysable polymer as shown by the formula (1) and the fluorooxyalkylene-containing both-terminal hydrolysable polymer as shown by the formula (2) may be produced by the following method.

At first, a compound having a terminal unsaturated group is introduced into the terminal hydroxyl group of the perfluorooxyalkylene-containing polymer by a heretofore known method. In this method, for example, a polymer having an alcoholic group in its one terminal shown by A-RfCH₂OH is reacted with allyl bromide in the presence of tetrabutyl ammonium hydrogen sulfate; and then, a sodium hydroxide solution or the like is gradually added thereinto thereby making it to the alkaline solution to obtain a polymer shown by A-RfCH₂OCH₂CH=CH₂.

Then, a hydrolysable silyl group is introduced into the terminal of the polymer having the terminal unsaturated group. This is done by carrying out an addition reaction of the polymer composition having the terminal unsaturated group obtained in the foregoing process with an organic silicon compound having a SiH bond on its one terminal and a hydrolysable group on its other terminal. The addition reaction may be done under a heretofore known condition in the presence of an addition reaction catalyst, for example, a compound belonging to the Pt group.

Alternatively, the process may be carried out by reacting the polymer composition having the terminal unsaturated group with an organic silicon compound having many SiH bonds.

The polymer obtained by the reaction has many remaining SiH groups in the molecule so that number of the terminal hydrolysable group may be increased by reacting further the remaining SiH groups with the organic silicon compound having an unsaturated group and a hydrolysable group.

The present disclosure provides a surface treating material containing as its main component the coating composition comprising any one or more of the fluorooxyalkylene-containing one-terminal hydrolysable polymer as shown by the formula (1) and the fluorooxyalkylene-containing both-terminal hydrolysable polymer as shown by the formula (2). The surface treating material may include a partial hydrolysis condensation compound obtained by partially hydrolyzing and condensing the terminal hydrolysable group of the fluorooxyalkylene-containing polymer composition of the present disclosure by a heretofore known method.

If necessary, the surface treating material may be added with a catalyst for the hydrolysis condensation reaction such as an organic tin compound (such as dibutyltin dimethoxide and dibutyltin dilaurate), an organic titanium compound (such as tetra-n-butyl titanate), an organic acid (such as acetic acid, methanesulfonic acid, and a fluorinated carboxylic acid), and an inorganic acid (such as hydrochloric acid and sulfuric acid). Among them, acetic acid, tetra-n-butyl titanate, dibutyltin dilaurate, and a fluorinated carboxylic acid are particularly preferable. Adding amount of them is catalytic amount, generally in the range of 0.01 to 5 parts by mass, in particular in the range of 0.1 to 1 parts by mass, relative to 100 parts by mass of the fluorooxyalkylene-containing polymer and/or the partial hydrolysis condensation compound thereof.

The surface treating material may contain an appropriate solvent. Illustrative example of the solvent like this includes a fluorinated aliphatic hydrocarbon solvent (such as perfluoroheptane and perfluorooctane), a fluorinated aromatic hydrocarbon solvent (such as m-xylene hexafluoride, benzotrifluoride, and 1,3-trifluoromethyl benzene, a fluorinated ether solvent (such as methyl perfluorobutyl ether, ethyl perfluorobutyl ether, and perfluoro(2-butyltetrahydrofuran)), a fluorinated alkylamine solvent (such as perfluorotributyl amine and perfluorotripentyl amine), a hydrocarbon solvent (such as petroleum benzine, mineral spirit, toluene, and xylene), and a ketonic solvent (such as acetone, methyl ethyl ketone, and methyl isobutyl ketone). Among these solvents, a fluorinated solvent is preferable in view of its solubility and wetting property; in particular, m-xylene hexafluoride, perfluoro(2-butyltetrahydrofuran), perfluorotributyl amine, and ethyl perfluorobutyl ether are preferable.

These solvents may be used as a mixture of two or more of them, wherein it is preferable to uniformly dissolve the fluorooxyalkylene-containing polymer and the partial hydrolysis condensation compound thereof. Meanwhile, the most optimum concentration of the fluorooxyalkylene-containing polymer composition to be dissolved in the solvent is preferably in the range of 0.01 to 10% by weight, in particular in the range of 0.05 to 5% by weight, though the condensation depends on treatment method.

The surface treating material may be applied to a substrate by heretofore known methods such as brushing, dipping, spraying, and vapor deposition. The curing temperature is, for example when the material is applied by brushing or dipping, preferably in the range of room temperature to 80°C, though the temperature depends on curing method. As to the curing humidity, curing is done preferably under a humidified condition in order to facilitate the reaction. Film thickness of the cured film is usually in the range of 0.1 to 100 nm, in particular in the range of 1 to 20 nm, though the thickness is chosen appropriately in accordance with the substrate.

The substrate to be treated by the surface treating material is not particularly restricted; and thus, various substrates such as a paper, a cloth, a metal and an oxide thereof, a glass, a plastics, a ceramics, and a quartz may be used; and these may be provided with water-repellent and oil-repellent properties, a chemical resistance, a mold-releasing property, a low dynamic friction property, and an anti-fouling property. In particular, an optical article, a film, a glass, a quartz substrate, and so forth may be mentioned.

Specific example of the treatment and the article treated with the surface treating material of the present disclosure includes a coating to prevent a fingerprint and a sebum from adhering to an optical article such as a car navigator, a mobile phone, a digital camera, a digital video camera, PDA, a portable audio player, a car audio, a game machine, an glass lens, a camera lens, a lens filter, a sunglasses, a medical instrument such as a gastric camera, a copying machine, PC, a liquid crystal display, an organic EL display, a plasma display, a touch panel display, a protective film, and an antireflective film; a water-repellent anti-fouling coating of a sanitary article such as a bath tub and a lavatory; an anti-fouling coating of a window glass, a head lamp cover, and so forth of a car, a train, an airplane, and so forth; a water-repellent anti-fouling coating of an exterior wall architectural material; a coating for anti-fouling by an oil for a kitchen architectural material; a water-repellent anti-fouling coating, which is also to prevent graffiti and attachment of a bill, in a telephone box; a water-repellent fingerprint-preventing coating of an art object and the like; a fingerprint-preventing coating of a compact disc, DVD, and so forth; release agent for nanoimprint mold; a modifier of fluidity and dispersibility of a paint additive, a resin modifier, and an inorganic filler; an improver of a lubricating property of a tape, a film, and so forth.

### EXAMPLES

Hereinafter, the present invention will be explained in more detail by showing Examples and Comparative Examples; but the present invention is not restricted by the following Examples. Meanwhile, the compounds used in the present invention can be synthesized by combining heretofore known methods.

### Comparative Synthesis Example

At first, a polymer A-RfCH₂O which has an alcohol group on its one terminal with the number-average molecular weight of 4000 is arranged. The Rf group represents a perfluoropolyether group, which is exemplified by the groups shown by the following formulae (3), (4), and (5). "A" represents F or H, 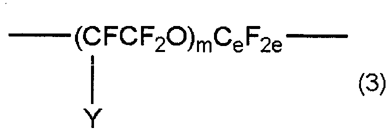 wherein Y independently represents F or a CF₃ group; "m" represents an integer of 3 to 200; and "e" represents an integer of 1 to 3,

- (CF₂CF₂CF₂O)ₘCₑF₂ₑ- (4)

wherein "m" represents an integer of 3 to 200; and "e" represents an integer of 1 to 3, 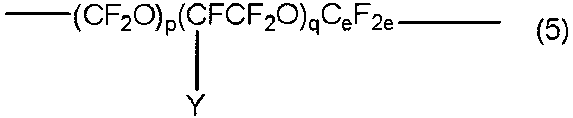 wherein Y independently represents F or a CF₃ group; "p" and "q" each represent an integer of 0 to 200 with p+q of 3 to 200; each repeating unit may be bonded randomly; and "e" represents an integer of 1 to 3.

In a reactor, 40 g of the foregoing polymer A-RfCH₂OH, 3.5 g of allyl bromide, and 0.4 g of tetrabutyl ammonium hydrogen sulfate were placed; and then, after the resulting mixture is stirred at 50°C for 3 hour, 5.2 g of a 30% aqueous sodium hydroxide solution is added gradually thereinto. After aging at 55°C for 12 hours, an appropriate amount of hydrochloric acid is added. After this resulting mixture is stirred, it is thoroughly washed by water. The lower phase is separated and a solvent contained therein is removed by distillation to obtain a liquid polymer A-RfCH₂OCH₂CH=CH₂ as a main product.

Then, 30 g of the mixture obtained in the above process, 20 g of 1,3-trifluoromethyl benzene, 10 g of tetramethyl cyclotetrasiloxane, and 0.1 g of a chloroplatinic acid/vinyl siloxane complex (containing 2.5×10⁻⁸ mole as the Pt single body) in the toluene solution are mixed; and then, the resulting mixture is aged at 70°C for 3 hours. Thereafter, the solvent and unreacted compounds are removed by distillation under reduced pressure to obtain the following compound (9).

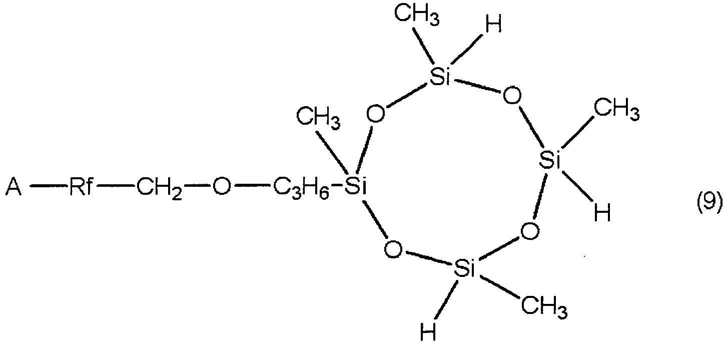

Then, 30 g of the mixture obtained in the above process, 20 g of 1,3-trifluoromethyl benzene, 3.7 g of allyl trimethoxy silane, and 0.1 g of a chloroplatinic acid/vinyl siloxane complex (containing 2.5×10⁻⁸ mole as the Pt single body) in the toluene solution are mixed; and then, the resulting mixture is aged at 70°C for 2 hours. Thereafter, the solvent and unreacted compounds are removed by distillation under reduced pressure to obtain the following compound (10).

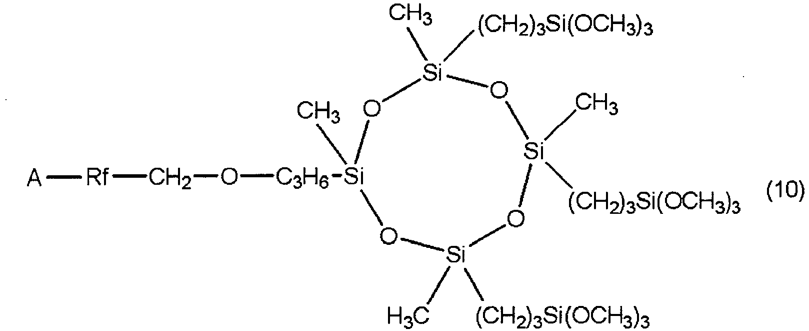

### Preparation of surface treating material and formation of cured film:

The surface treating material was prepared by dissolving the compounds and the compositions with the composition ratios shown in Table 1 and Table 2 in 1,3-trifluoromethyl benzene so as to give the concentration thereof being 20% by weight. Each of the surface treating materials was applied by vacuum deposition with the film thickness of about 15 nm (treatment conditions of the pressure of 3.0×10⁻³ Pa and the temperature of 500°C) onto a glass having its outermost surface treated by SiO₂ with the film thickness of 10 nm (Gorilla, manufactured by Corning Inc.); and then, it was cured at room temperature for 24 hours to form a cured film.

### Compositions 1 to 16

### Compound 1:

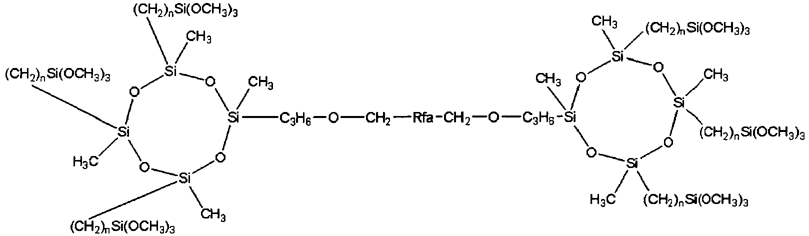

Rfa: -CF₂(OC₂F₄)ₚ(OCF₂)_{q}-OCF₂-
(p/q=0.9, p+q is about 45)

The compound having average 5 or more of the trialkoxy group introduced into the molecule, as shown by the ¹H NMR analysis, was used.

### Compound 2:

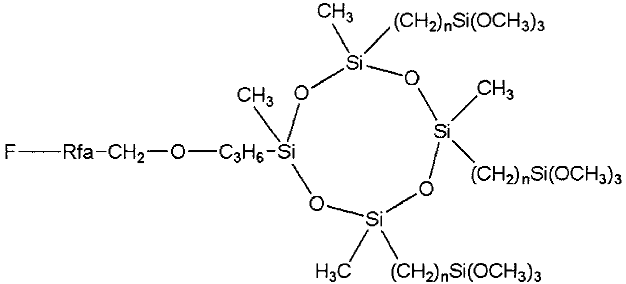

Rfa: -CF₂(OC₂F₄)ₚ(OCF₂)_{q}-OCF₂-
(p/q=0.9, p+q is about 45)

The compound having average 2.5 or more of the trialkoxy group introduced into the molecule, as shown by the ¹H NMR analysis, was used.

### Compound 3:

CF₃(OC₂F₄)p(OCF₂)_{q}-OCF₃

(p/q=0.9, p+q is about 45)

**Table 1**

| | Composition ratio (%) | | |
|---|---|---|---|
| | Compound 1 | Compound 2 | Compound 3 |
| Composition 1 | 100 | 0 | 0 |
| | n=2 | | |
| Composition 2 | 100 | 0 | 0 |
| | n=3 | | |
| Composition 3 | 100 | 0 | 0 |
| | n=6 | | |
| Composition 4 | 100 | 0 | 0 |
| | n=8 | | |
| Comparative Composition 5 | 0 | 100 | 0 |
| | | n=2 | |
| Comparative Composition 6 | 0 | 100 | 0 |
| | | n=3 | |
| Comparative Composition 7 | 0 | 100 | 0 |
| | | n=6 | |
| Comparative Composition 8 | 0 | 100 | 0 |
| | | n=8 | |
| Composition 9 | 5 | 80 | 15 |
| | n=2 | n=2 | |
| Composition 10 | 5 | 80 | 15 |
| | n=3 | n=3 | |
| Composition 11 | 5 | 80 | 15 |
| | n=6 | n=6 | |
| Composition 12 | 5 | 80 | 15 |
| | n=8 | n=8 | |

### Compound 4:

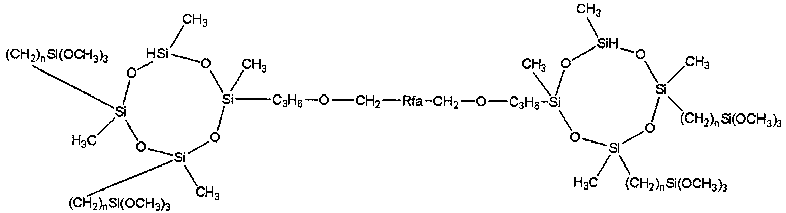

Rfa: -CF₂(OC₂F₄)ₚ(OCF₂)_{q}-OCF₂-
(p/q=0.9, p+q is about 45)

The compound having average 5 or more of the trialkoxy group introduced into the molecule, as shown by the ¹H NMR analysis, was used.

### Compound 5:

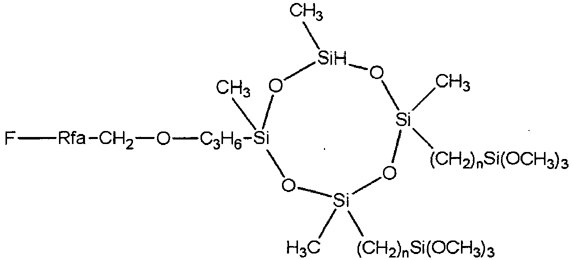

Rfa: -CF₂(OC₂F₄)ₚ(OCF₂)_{q}-OCF₂-
(p/q=0.9, p+q is about 45)

The compound having average 1.8 to 2.2 of the trialkoxy group introduced into a molecule, as shown by the ¹H NMR analysis, was used.

**Table 2**

| | Composition ratio (%) | | |
|---|---|---|---|
| | Compound 4 | Compound 5 | Compound 3 |
| Composition 13 | 5 | 80 | 15 |
| | n=2 | n=2 | |
| Composition 14 | 5 | 80 | 15 |
| | n=3 | n=3 | |
| Composition 15 | 5 | 80 | 15 |
| | n=6 | n=6 | |
| Composition 16 | 5 | 80 | 15 |
| | n=8 | n=8 | |

### Compound 6:

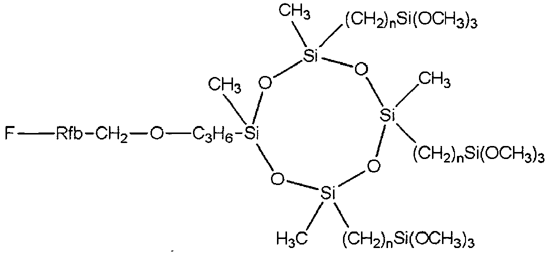

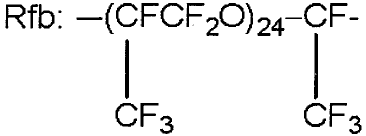

Comparison was made with the following compounds.

### Comparative Compounds 1 to 7

### Comparative Compound 1:

F₃C(OC₂F₄)ₚ(OCF₂)_{q}-OCF₂CH₂OC₃H₆Si(OCH₃)

(p/q=0.9, p+q is about 45)

### Comparative Compound 2:

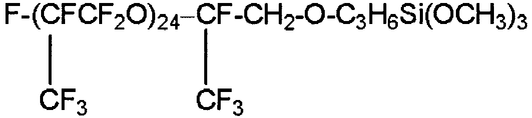

### Comparative Compound 3:

(CH₃O)₃SiC₃H₆OCH₂-CF₂(OC₂F₄)ₚ(OCF₂)_{q}-OCF₂-CH₂OC₃H₆Si(OCH₃)₃

(p/q=0.9, p+q is about 45)

### Comparative Compound 4:

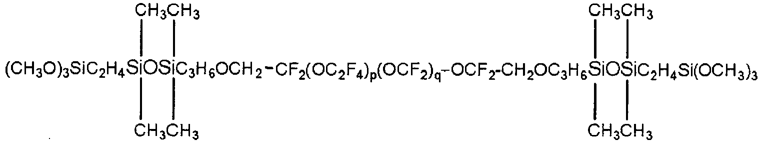

(p/q=0.9, p+q is about 45)

### Comparative Compound 5:

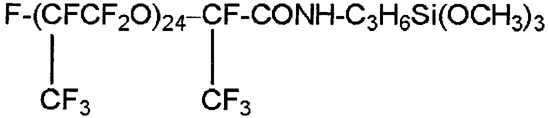

### Comparative Compound 6:

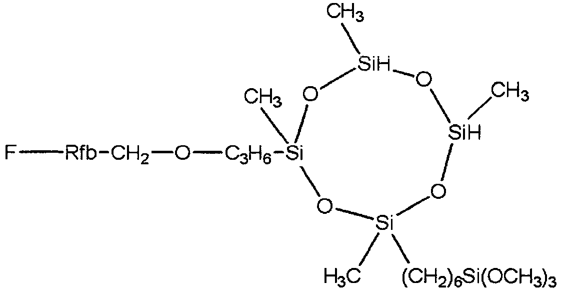

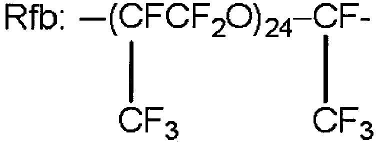

### Comparative Compound 7:

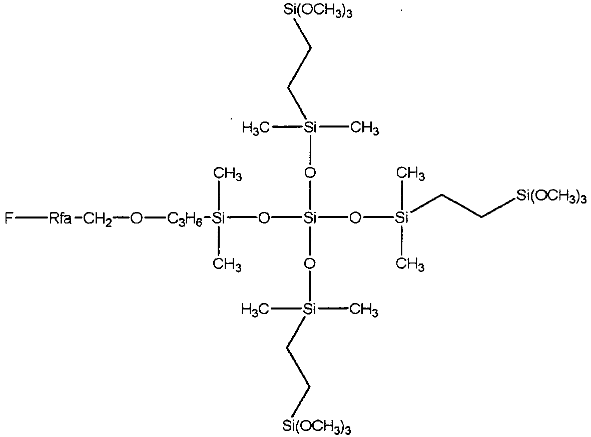

Rfa: -CF₂(OC₂F₄)ₚ(OCF₂)_{q}-OCF₂-
(p/q=0.9, p+q is about 45)

The cured films thus obtained were evaluated by the following method. The results are shown in Table 3.

### Evaluation of water-repellent and oil-repellent properties:

By using the glass prepared as mentioned above, the contact angles of the cured film to water as well as to oleic acid were measured by using a contact angle measurement instrument (Drop Master, manufactured by Kyowa Interface Science Co., Ltd.).

### Evaluation of the base resistance 1:

The contact angle to water is measured after being soaked in a 1% by weight of aqueous sodium hydroxide solution for 48 hours.

### Evaluation of the base resistance 2:

The contact angle to water is measured after being soaked in a 5% by weight of aqueous potassium hydroxide solution for 10 hours.

### Evaluation of the acid resistance:

The contact angle to water is measured after being soaked in a 1% by weight of aqueous hydrochloric acid solution for 48 hours.

**Table 3**

| | Treating material | Contact angle before test | | Water contact angle after sustainability test (° ) | | |
|---|---|---|---|---|---|---|
| | | | | Base resistance 1 | Base resistance 2 | Acid resistance |
| | | Water repellency (° ) | Oil repellency (° ) | Water repellency (° ) | Water repellency (° ) | Water repellency (° ) |
| Example 1 | Composition 1 | 108 | 68 | 103 | 102 | 103 |
| Example 2 | Composition 2 | 107 | 67 | 105 | 104 | 105 |
| Example 3 | Composition 3 | 108 | 67 | 106 | 104 | 104 |
| Example 4 | Composition 4 | 108 | 68 | 107 | 107 | 105 |
| Example 5 | Comparative Composition 5 | 115 | 74 | 109 | 107 | 107 |
| Example 6 | Comparative Composition 6 | 116 | 75 | 111 | 112 | 110 |
| Example 7 | Comparative Composition 7 | 115 | 75 | 113 | 112 | 111 |
| Example 8 | Comparative Composition 8 | 115 | 76 | 112 | 113 | 110 |
| Example 9 | Composition 9 | 115 | 73 | 105 | 104 | 104 |
| Example 10 | Composition 10 | 115 | 75 | 108 | 108 | 109 |
| Example 11 | Composition 11 | 115 | 74 | 111 | 110 | 108 |
| Example 12 | Composition 12 | 115 | 75 | 112 | 111 | 111 |
| Example 13 | Composition 13 | 115 | 75 | 103 | 103 | 101 |
| Example 14 | Composition 14 | 115 | 74 | 108 | 109 | 105 |
| Example 15 | Composition 15 | 115 | 75 | 109 | 108 | 103 |
| Example 16 | Composition 16 | 114 | 74 | 108 | 108 | 106 |
| Example 17 | Compound 6 | 115 | 76 | 109 | 110 | 110 |
| Comparative Example 1 | Comparative Compound 1 | 115 | 74 | 32 | 18 | 89 |
| Comparative Example 2 | Comparative Compound 2 | 115 | 75 | 59 | 55 | 92 |
| Comparative Example 3 | Comparative Compound 3 | 110 | 70 | 88 | 92 | 95 |
| Comparative Example 4 | Comparative Compound 4 | 108 | 68 | 65 | 32 | 45 |
| Comparative Example 5 | Comparative Compound 5 | 115 | 74 | 94 | 93 | 72 |
| Comparative Example 6 | Comparative Compound 6 | 115 | 75 | 88 | 65 | 83 |
| Comparative Example 7 | Comparative Compound 7 | 115 | 75 | 98 | 95 | 56 |

Comparative Examples 1, 2, 5, and 6 respectively use the polymer having the functional group on one terminal to which only one trialkoxy group is attached. The surface treated with these polymers lacks the chemical resistance. This is because there are not many contact points with the substrate so that surface thereof is readily attacked by a base and an acid. In Comparative Examples 3 and 4 in which the trialkoxy group is attached one each to both terminals, the chemical resistance is poor similarly to the above. Further, in Comparative Example 7 in which the polymer having the functional group on one terminal to which three trialkoxy groups are attached is used, the chemical resistance is also poor. This is because Comparative Compound 7 used in Comparative Example 7 uses the siloxane group of the Q unit in the connecting group so that this connecting group is readily decomposed by a base and an acid.

On the contrary, the surface treating materials of Examples 1 to 17 can maintain excellent water-repellent and oil-repellent properties for a long period of time even though the substrate is soaked in a base or an acid.

It must be noted here that the present invention is not limited to the embodiments as described above. The foregoing embodiments are mere examples;

## Claims

1. A coating composition comprising a fluorooxyalkylene-containing both-terminal hydrolysable polymer as shown by the following formula (2), 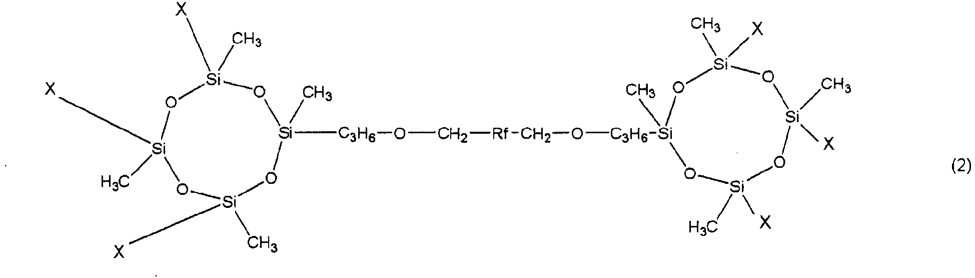 wherein Rf represents a divalent perfluorooxyalkylene-containing group; X represents a -(CH₂)ₙSiX' group or a hydrogen atom, "n" represents an integer of 2 to 10; and X' represents a hydrolysable group, though one or less of X in each terminal represents a hydrogen atom.

2. The coating composition according to claim 1, wherein the Rf group in the formula (2) is a group shown by any of the following general formulae (6), (7), and (8), 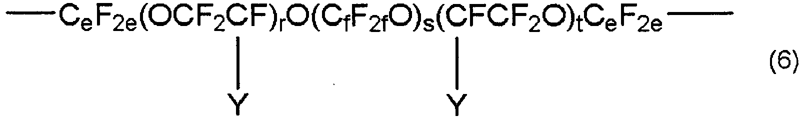 wherein each Y independently represents F or a CF₃ group; "e" represents an integer of 1 to 3; "f" represents an integer of 2 to 6; "r" and "t" each represent an integer of 0 to 200 with r+t of 3 to 200; "s" represents an integer of 0 to 6; and each repeating unit may be bonded randomly,
-CₑF₂ₑ(CF₂CF₂CF₂O)ₘCₑF₂ₑ- (7)
wherein "m" represents an integer of 3 to 200, and "e" represents an integer of 1 to 3, 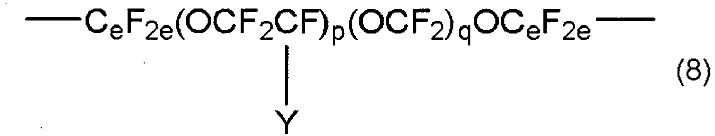 and wherein each Y independently represents F or a CF₃ group; "e" represents an integer of 1 to 3; "p" and "q" each represent an integer of 0 to 200 with p+q of 3 to 200; and each repeating unit may be bonded randomly.

3. A surface treating material which contains a coating composition comprising the coating composition according to any one of claims 1 to 2 and/or a partial hydrolysis condensation compound of the fluorooxyalkylene-containing polymers.

4. An article treated with the surface treating material according to claim 3.

5. A surface-treated article, wherein the article according to claim 4 is any of an optical article, a film, a glass, and a quartz substrate.

## Patentansprüche

1. Beschichtungszusammensetzung, umfassend ein Fluoroxyalkylen-enthaltendes hydrolysierbares Polymer mit zwei Enden, wie in der folgenden Formel (2) gezeigt, 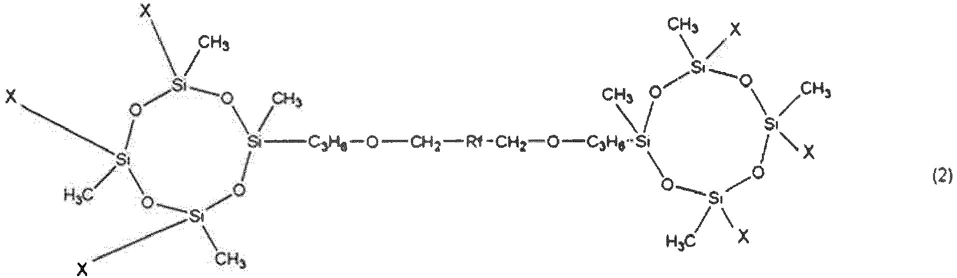 wobei Rf eine divalente Perfluoroxyalkylen-enthaltende Gruppe darstellt; X eine -(CH₂)ₙSiX' Gruppe oder ein Wasserstoffatom darstellt, "n" eine Ganzzahl von 2 bis 10 darstellt; und X' eine hydrolysierbare Gruppe darstellt, obwohl ein oder weniger X an jedem Ende ein Wasserstoffatom darstellt.

2. Beschichtungszusammensetzung nach Anspruch 1, wobei die Rf Gruppe in der Formel (2) eine Gruppe ist, die durch eine beliebige der folgenden allgemeinen Formeln (6), (7) und (8) gezeigt ist, 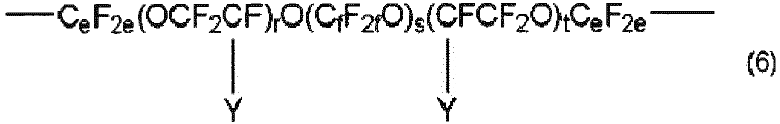 wobei jedes Y unabhängig voneinander F oder eine CF₃ Gruppe darstellt; "e" eine Ganzzahl von 1 bis 3 darstellt; "f" eine Ganzzahl von 2 bis 6 darstellt; "r" und "t" jeweils eine Ganzzahl von 0 bis 200 mit r+t 3 bis 200 darstellen; "s" eine Ganzzahl von 0 bis 6 darstellt; und jede Widerholungseinheit zufällig verbunden sein kann,
-CₑF₂ₑ(CF₂CF₂CF₂O)ₘCₑF2ₑ- (7)
wobei "m" eine Ganzzahl von 3 bis 200 darstellt und "e" eine Ganzzahl von 1 bis 3 darstellt, 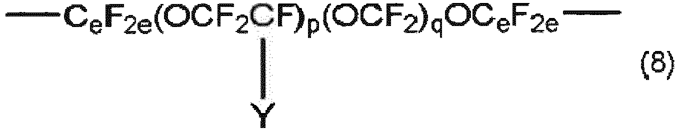 und wobei jedes Y unabhängig voneinander F oder eine CF₃ Gruppe darstellt; "e" eine Ganzzahl von 1 bis 3 darstellt; "p" und "q" jeweils eine Ganzzahl von 0 bis 200 mit p+q 3 bis 200 darstellen; und jede Wiederholungseinheit zufällig verbunden sein kann.

3. Oberflächenbehandlungsmaterial, enthaltend eine Beschichtungszusammensetzung umfassend die Beschichtungszusammensetzung gemäß eine beliebigen der Ansprüche 1 bis 2 und/oder eine Verbindung aus der partiellen Hydrolysekondensation der Fluoroxyalkylen-enhaltenden Polymere.

4. Artikel, der mit dem Oberflächenbehandlungsmaterial gemäß Anspruch 3 behandelt ist.

5. Oberflächenbehandelter Artikel, wobei der Artikel gemäß Anspruch 4 ein beliebiger von einem optischen Artikel, einem Film, einem Glas, und einem Quarzsubstrat ist.

## Revendications

1. Composition de revêtement comprenant un polymère hydrolysable à deux extrémités contenant du fluorooxyalkylène tel que présenté par la formule (2) suivante, 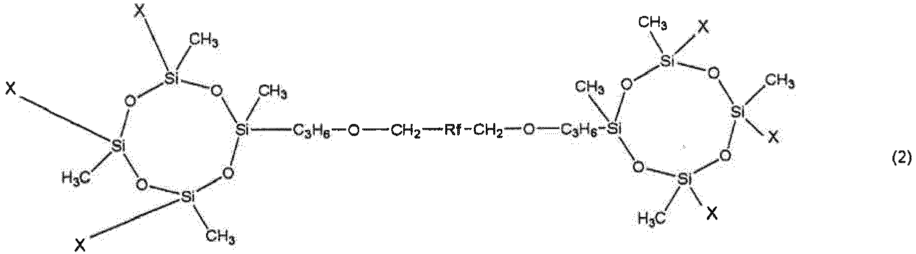 dans laquelle Rf représente un groupe divalent contenant du perfluorooxyalkylène ; X représente un groupe -(CH₂)ₙSiX' ou un atome d'hydrogène, « n » représente un nombre entier de 2 à 10 ; et X' représente un groupe hydrolysable, bien qu'un X ou moins dans chaque extrémité terminale représente un atome d'hydrogène.

2. Composition de revêtement selon la revendication 1, dans laquelle le groupe Rf dans la formule (2) est un groupe présenté par l'une quelconque des formules générales (6), (7) et (8) suivantes, 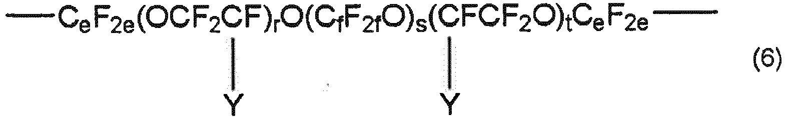 dans laquelle chaque Y représente indépendamment un F ou un groupe CF₃ ; « e » représente un nombre entier de 1 à 3 ; « f » représente un nombre entier de 2 à 6 ; « r » et « t » représentent chacun un nombre entier de 0 à 200 avec r + t de 3 à 200 ; « s » représente un nombre entier de 0 à 6 ; et chaque motif de répétition peut être lié de façon aléatoire,
-CₑF₂ₑ(CF₂CF₂CF₂O)ₘCₑFzₑ- (7)
dans laquelle « m » représente un nombre entier de 3 à 200, et « e » représente un nombre entier de 1 à 3, 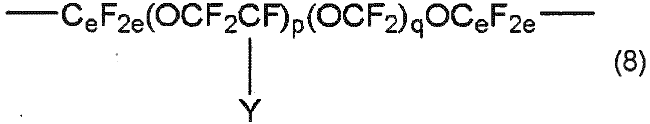 et dans laquelle chaque Y représente indépendamment un F ou un groupe CF₃ ; « e » représente un nombre entier de 1 à 3 ; « p » et « q » représentent chacun un nombre entier de 0 à 200 avec p + q de 3 à 200 ; et chaque motif de répétition peut être lié de manière aléatoire.

3. Matériau de traitement de surface qui contient une composition de revêtement comprenant la composition de revêtement selon l'une quelconque des revendications 1 à 2 et/ou un composé d'hydrolyse et condensation partielles des polymères contenant du fluoroxyalkylène.

4. Article traité avec le matériau de traitement de surface selon la revendication 3.

5. Article traité en surface, dans lequel l'article selon la revendication 4 est l'un quelconque d'un article optique, d'un film, d'un verre et d'un substrat en quartz.
